# DEMANDE DE BREVET EUROPEEN

(11) **EP 3 299 219 A1**
(43) Date de publication de la demande: **28.03.2018**
(21) Numéro de dépôt: 17189921.4
(22) Date de dépôt: 07.09.2017
(51) Int. Cl.: B60Q 1/26, B60Q 3/74

(54) **DISPOSITIF LUMINEUX COMPORTANT UNE SOURCE LUMINEUSE SURFACIQUE (OLED)**

(30) Priorité: 21.09.2016 FR 1658886
(71) Demandeur: Valeo Vision, 93012 Bobigny Cedex (FR)
(72) Inventeur: POIROT, Pascal, 93012 BOBIGNY Cedex (FR); BATHIERY, Babacar, 93012 BOBIGNY Cedex (FR)
(74) Mandataire: Valeo Vision

(57) **Abrégé**

L'invention concerne un dispositif lumineux pour dispositif d'éclairage et/ou de signalisation de véhicule automobile comportant :
- une source lumineuse surfacique flexible
- un boîtier agencé pour conformer au moins une partie de la source lumineuse surfacique flexible selon une forme prédéterminée
- un capot agencé pour plaquer ladite partie de la source lumineuse surfacique flexible contre le boîtier
le boîtier et/ou le capot étant apte à laisser passer de la lumière émise par la source lumineuse surfacique flexible.

## Description

L'invention concerne le domaine de l'éclairage et/ou de signalisation, notamment pour véhicules automobiles. Plus particulièrement, l'invention concerne un dispositif lumineux pour un dispositif d'éclairage et/ou de signalisation de véhicule automobile.

Dans les véhicules automobiles, les diodes électroluminescentes organiques (OLED) flexibles sont de plus en plus utilisées. En effet, les OLED flexibles offrent de nombreuses possibilités de formes et de style, contribuant ainsi à l'esthétisme du véhicule ainsi qu'à sa signature visuelle spécifique.

De plus, les OLED flexibles permettent également d'émettre de la lumière depuis une surface d'émission et procurent ainsi un rendu visuel homogène de cette surface d'émission quelle que soit la direction d'observation. Le véhicule est alors mieux visible, ce qui augmente la sécurité ainsi que l'aspect esthétique du véhicule.

Toutefois, en raison de leur flexibilité, il est nécessaire de maintenir en forme ces OLED flexibles afin de pouvoir les intégrer dans un dispositif lumineux du véhicule.

Il est connu du document FR3018393 une méthode pour conformer une OLED flexible en moulant une résine sur cette OLED flexible. Cependant, cette méthode de mise en forme présente un risque de détérioration de l'OLED flexible. Par ailleurs, cette méthode impose un procédé de fabrication complexe, long et couteux. Il existe donc un besoin de conformer et de maintenir en forme, de façon simple, rapide et peu couteuse, une OLED flexible sans la détériorer.

Un but de l'invention est ainsi de répondre à ce besoin.

A cet effet, l'invention propose un dispositif lumineux pour dispositif d'éclairage et/ou de signalisation de véhicule automobile comportant :
- une source lumineuse surfacique flexible
- un boîtier agencé pour conformer au moins une partie de la source lumineuse surfacique flexible selon une forme prédéterminée
- un capot agencé pour plaquer ladite partie de la source lumineuse surfacique flexible contre le boîtier
le boîtier et/ou le capot étant apte à laisser passer de la lumière émise par la source lumineuse surfacique flexible.

Ainsi, grâce à la présente invention, l'OLED flexible peut être conformée sans être détériorée puisqu'on ne vient pas mouler une résine sur cette OLED flexible. En outre, l'utilisation d'un boîtier et d'un capot permet de conformer et de maintenir en forme de façon très simple, très rapide et peu couteuse l'OLED flexible.

De façon avantageuse, l'invention peut être mise en oeuvre dans un dispositif d'éclairage de la route, un dispositif de signalisation du véhicule ou encore dans un dispositif d'éclairage de l'intérieur du véhicule.

On entend par source lumineuse surfacique une source présentant une surface émettrice de lumière et dont les dimensions de la surface émettrice de lumière sont sensiblement supérieures à la hauteur de la source surfacique, par exemple dont l'aire est supérieure à 1 cm², voire supérieure à 10 cm².
On entend par source lumineuse flexible une source lumineuse que l'on peut déformer sans casser, notamment en la pliant ou en la courbant, et sans sensiblement altérer la fonction d'émission de lumière.

Avantageusement, ladite partie de la source lumineuse surfacique flexible comporte une surface émettrice de lumière de ladite source lumineuse surfacique flexible.

De préférence, la totalité de la source lumineuse surfacique flexible est conformée selon une forme prédéterminée.

Dans la suite de la description, on considérera que le capot est apte à laisser passer de la lumière. On pourrait de façon alternative ou cumulative considérer que c'est le boîtier qui est apte à laisser passer la lumière sans sortir du cadre de la présente invention.

Selon un mode de réalisation, le capot est venu de matière avec le boîtier. Le cas échéant, le boîtier et le capot peuvent être agencés pour former une cavité débouchant sur une fente par laquelle ladite partie de la source lumineuse surfacique flexible peut être insérée dans la cavité.

Selon un autre mode de réalisation, le boîtier et le capot sont deux éléments distincts.

Par exemple, le dispositif comporte un moyen de liaison, et notamment une charnière, reliant le capot et le boîtier et agencé de sorte à ce que le capot soit mobile vis-à-vis du boîtier pour permettre l'insertion de la source lumineuse surfacique flexible entre le boîtier et le capot.

En variante, le boîtier et le capot sont agencés pour venir en contact de façon à encapsuler la source lumineuse surfacique flexible, notamment la totalité de la source lumineuse surfacique flexible. On entend par « encapsuler » le fait que la mise en contact du boîtier et du capot est agencée pour former une capsule étanche, notamment étanche à l'humidité. L'encapsulation de la source lumineuse surfacique flexible permet de prévenir la détérioration de cette source lumineuse surfacique flexible qui serait causée par l'infiltration d'un élément perturbateur entre le capot et la source lumineuse surfacique flexible, par exemple l'infiltration d'humidité.

Avantageusement, la source lumineuse surfacique flexible repose sur une paroi de fond du boîtier et la source lumineuse surfacique flexible est plaquée par une paroi de plaquage du capot sur la paroi de fond du boîtier.

Par exemple, le boîtier comporte un rebord périphérique s'étendant depuis la paroi de fond du boîtier, notamment depuis le pourtour de la paroi de fond, et définissant une enceinte pour recevoir la source lumineuse surfacique flexible. Le cas échéant, au moins une partie du capot repose sur ledit rebord périphérique du boîtier pour capsuler l'enceinte. Dans une variante, ledit rebord périphérique du boîtier fait saillie par rapport à la surface émettrice de la source lumineuse surfacique flexible quand ladite source lumineuse surfacique flexible repose sur la paroi de fond. Dans une autre variante, ledit rebord périphérique du boîtier affleure la surface émettrice de la source lumineuse surfacique flexible quand ladite source lumineuse surfacique flexible repose sur la paroi de fond.

Avantageusement, au moins une partie du capot, définissant la paroi de plaquage du capot, est insérée dans l'enceinte pour plaquer la source lumineuse surfacique flexible contre la paroi de fond du boîtier. Dans une variante, une zone périphérique du capot repose sur le rebord périphérique du boîtier tandis qu'une zone centrale du capot, en saillie par rapport à la zone périphérique et définissant la paroi de plaquage du capot, est insérée dans l'enceinte. Dans une autre variante, la totalité du capot est insérée dans l'enceinte pour plaquer la source lumineuse surfacique flexible.

Avantageusement, le capot comporte un rebord périphérique s'étendant depuis la paroi de plaquage du capot et définissant une enceinte pour recevoir la source lumineuse surfacique flexible. De préférence, le rebord périphérique du capot repose sur une partie du boîtier, notamment une zone périphérique du boîtier entourant la paroi de fond. Avantageusement, au moins une partie du boîtier, ladite partie définissant la paroi de fond du boîtier est insérée dans l'enceinte formée par le rebord périphérique du capot. Dans une variante, la totalité du boîtier est insérée dans l'enceinte.

Avantageusement, le boîtier et le capot sont soudés entre eux. Le cas échéant, le rebord périphérique de l'un du boîtier et/ou du capot peut être soudé à la zone périphérique de l'autre du boîtier et/ou du capot. En variante, le boîtier et/ou le capot étant inséré dans l'enceinte définie par le rebord périphérique de l'autre du boîtier et/ou du capot, une paroi extérieure périphérique du boîtier et/ou du capot est en contact avec une paroi intérieure périphérique de l'autre du boîtier et/ou du capot. Le cas échéant, une partie de la paroi extérieure périphérique est soudée à une partie de la paroi intérieure périphérique. La soudure peut notamment être réalisée à l'aide d'un laser.

Dans une variante, le boîtier et le capot sont collés entre eux..

Dans une autre variante, le boîtier et le capot sont fixés l'un à l'autre grâce à un moyen de fixation mécanique. Avantageusement, le capot comporte un moyen d'encliquetage mâle, notamment un clip, et le boîtier comporte un moyen d'encliquetage femelle, notamment une encoche, coopérant avec le moyen d'encliquetage mâle lors de la mise en contact du capot et du boîtier pour former le moyen de fixation mécanique.

De préférence, la source lumineuse surfacique flexible comporte une surface d'émission de lumière supérieure à 1 cm², voire supérieure à 10 cm². Préférentiellement, la source lumineuse surfacique flexible est une diode électroluminescente organique flexible.

Avantageusement, au moins la paroi de plaquage du capot est réalisée dans un matériau transparent ou translucide qui permet de laisser passer de la lumière émise par la source lumineuse surfacique flexible.

Avantageusement, au moins la paroi de plaquage du capot est réalisée dans un matériau apte à coloriser la lumière émise par la source lumineuse surfacique flexible. L'émission de lumière colorée permet d'améliorer et de différencier l'esthétique du véhicule lorsque la source de lumière est activée et également de réaliser des fonctions photométriques réglementaires prédéterminées requérant une couleur particulière.

Avantageusement, au moins la paroi de plaquage du capot est réalisée dans un matériau thermoplastique transparent.

Avantageusement, le matériau thermoplastique transparent est du polyméthacrylate de méthyle (PMMA) ou du polycarbonate (PC).

Avantageusement, au moins la paroi de plaquage du capot comporte des trous aptes à laisser passer de la lumière. Le cas échéant, on pourra prévoir que le capot soit opaque plutôt que transparent ou translucide, par exemple étant formé par une plaque d'aluminium perforée.

Avantageusement, au moins une partie de la paroi de plaquage du capot est sérigraphiée. Le cas échéant, cette sérigraphie permet la visualisation d'un symbole ou d'un logo, lorsque de la lumière est émise par la source lumineuse surfacique flexible, et/ou en l'absence d'émission de lumière par la source lumineuse surfacique.

Avantageusement, au moins une partie de la paroi de plaquage du capot est agencée pour dévier au moins une partie de la lumière émise par la source surfacique flexible pour réaliser une fonction photométrique prédéterminée. Par exemple, au moins ladite partie de la paroi de plaquage du capot comporte des motifs optiques diffusants tels que des motifs de billage ou de grainage.

Avantageusement, le dispositif comporte des moyens de blocage aptes à coopérer avec des moyens de blocage complémentaires de la source lumineuse surfacique flexible, notamment formés sur le pourtour de cette source lumineuse surfacique flexible, pour supprimer le jeu de ladite source lumineuse surfacique flexible dans le boîtier. Par exemple, le capot et/ou le boîtier comporte des éléments en saillie formant lesdits moyens de blocage et la source lumineuse surfacique flexible comporte des encoches formant lesdits moyens de blocage complémentaires.

Avantageusement, le boîtier est réalisé dans un matériau opaque et/ou réfléchissant.

Dans une variante, le boîtier est réalisé dans un matériau transparent.

Avantageusement, le boîtier est réalisé dans un matériau thermoplastique.

Dans une variante, la forme prédéterminée est une surface tridimensionnelle. On entend par « surface tridimensionnelle » une surface courbée selon au moins une direction donnée, c'est-à-dire que trois coordonnées cartésiennes sont nécessaires pour définir chacun des points de la surface et ce, quel que soit le repère choisi. Avantageusement, la forme prédéterminée est une surface réglée.

Avantageusement, le boîtier et le capot présentent des profils identiques, ce qui permet de conformer plus facilement la source lumineuse surfacique flexible sur toute sa surface.

Avantageusement, le dispositif lumineux est dépourvu d'adhésif dans l'enceinte formée par le boîtier et le capot. De la sorte, on évite d'imposer à la source lumineuse surfacique flexible un stress mécanique important.

Avantageusement, le dispositif lumineux comporte des moyens de fixation pour fixer le dispositif dans le dispositif d'éclairage ou de signalisation. Le cas échéant, le boîtier et/ou le capot comporte les moyens de fixation.

D'autres caractéristiques et avantages de la présente invention apparaitront plus clairement à l'aide de la description et des dessins parmi lesquels :
- la figure 1 est une représentation d'un dispositif lumineux selon l'invention ;
- la figure 2a est un schéma de principe en vue selon la plan P1 d'un dispositif lumineux selon l'invention selon un premier mode de réalisation ;
- la figure 2b est un schéma de principe en vue selon le plan P2 du dispositif lumineux présenté sur la figure 2a ;
- la figure 3 est un schéma de principe en vue selon une coupe transversale d'un dispositif lumineux selon l'invention selon un deuxième mode de réalisation ;
- la figure 4 est un schéma de principe en vue selon une coupe transversale d'un dispositif lumineux selon l'invention selon un troisième mode de réalisation ;
- la figure 5 est un schéma de principe d'un mode de réalisation d'une source lumineuse surfacique flexible pouvant être utilisée pour la mise en oeuvre d'un dispositif d'éclairage et/ou de signalisation selon l'invention.

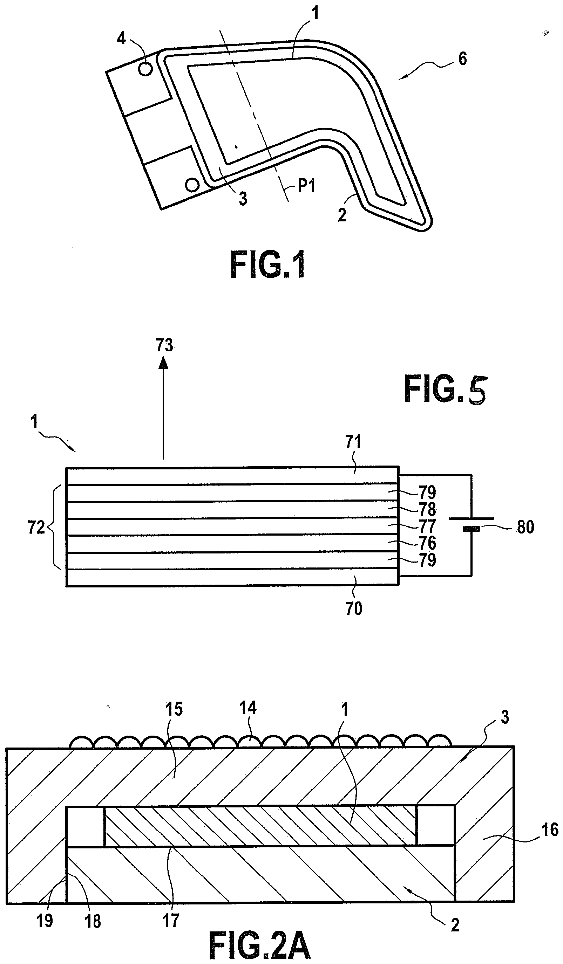

La figure 1 représente un dispositif lumineux 6 selon l'invention pour un dispositif d'éclairage et/ou de signalisation ou d'éclairage intérieur de véhicule automobile. Le dispositif lumineux 6 comprend une OLED flexible 1, un boîtier 2 et un capot 3. Un exemple de réalisation d'une telle source sera présenté par la suite en figure 5. Le boîtier 2 permet de conformer l'OLED flexible 1 en la courbant selon une direction pour former une surface réglée. Le capot 3 permet de plaquer l'OLED flexible 1 contre le boîtier 2.

Le boîtier 2 comprend également des moyens de fixation 4, réalisés dans cet exemple sous la forme d'orifices destinés à recevoir des vis, pour fixer le dispositif lumineux 6 dans le dispositif d'éclairage ou de signalisation.

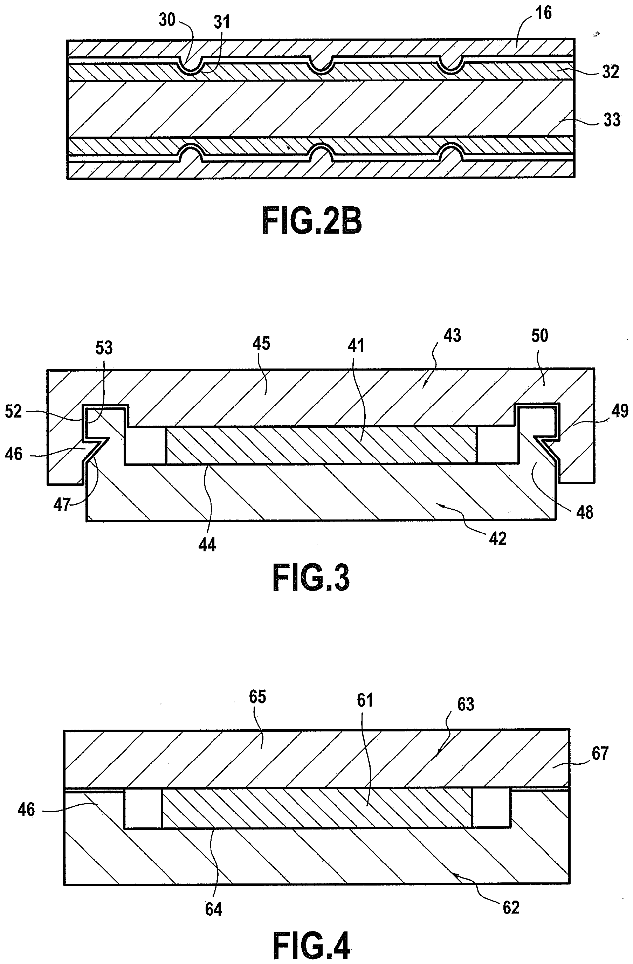

Les figures 2A et 2B représentent respectivement des vues en coupe selon les plans P1 et P2 du dispositif 6 de la figure 1.

L'OLED flexible 1 repose sur une paroi de fond 17 du boîtier 2 et ladite OLED flexible 1 est plaquée par une paroi de plaquage 15 du capot 3 sur la paroi de fond 17 du boîtier 2. L'OLED flexible 1 est ainsi conformée selon une forme prédéterminée par le boîtier 2 et maintenue dans cette forme par le capot 3. Le boîtier 2 et le capot 3 présentent des profils identiques. De plus, le boîtier 2 et le capot 3 encapsulent la totalité de l'OLED flexible 1. L'OLED flexible 1 est ainsi protégée des agressions extérieures et notamment de l'humidité, ce qui évite une détérioration prématurée de l'OLED flexible 1.

Le capot 3 comporte un rebord périphérique 16 s'étendant depuis la paroi de plaquage 15 et définissant une enceinte pour recevoir l'OLED flexible 1.

La totalité du boîtier 2 est insérée dans l'enceinte formée par le rebord périphérique 16 du capot 3. Le boîtier 2 comporte une paroi extérieure périphérique 18 et le capot 3 comporte une paroi intérieure périphérique 19, deux portions de ces parois périphériques 18 et 19 venant en contact à l'insertion du boîtier 2 dans le capot 3. La paroi extérieure périphérique 18 du boîtier 2 est soudée avec la paroi intérieure périphérique 19 du capot 3 au niveau de ces portions venant en contact.

Dans le mode de réalisation représenté, l'OLED flexible 1 présente deux surfaces émettrices de lumière supérieure et inférieure 33. La paroi de plaquage 15 du capot 3 est réalisée dans un matériau transparent permettant de laisser passer de la lumière émise par la surface émettrice supérieure 33 de l'OLED flexible 1. Ce matériau transparent est du polyméthacrylate de méthyle. La paroi de plaquage 15 du capot 3 comporte des motifs optiques 14, réalisés par un grainage de la face supérieure du capot 3, permettant de diffuser la lumière issue de la surface émettrice supérieure 33 de l'OLED flexible 1 et de donner un aspect homogène à la lumière sortant du dispositif lumineux.

Le boîtier 2 est réalisé dans un matériau réfléchissant, de sorte à réfléchir de la lumière émise par la surface émettrice inférieure 33 de l'OLED flexible 1 dans cette OLED flexible vers la face émettrice supérieure et donc vers la paroi de plaquage 15 du capot 3.Le rebord périphérique 16 du capot 3 comporte des éléments en saillie 30 convexes. L'OLED flexible 1 présente une zone fonctionnelle 32, notamment destinée pour son alimentation électrique, bordant les surfaces émettrices 33 de cette OLED flexible 1. L'OLED flexible 1 comporte en outre des encoches 31 concaves, réalisées sur le pourtour de la zone fonctionnelle 32. Les encoches 31 présentent un profil identique à celui des éléments en saillie 30, ces éléments en saillie 30 venant en vis-à-vis et s'insérant dans les encoches 31 de l'OLED flexible 1 lorsque l'OLED flexible 1 est encapsulée par le capot 3 et le boîtier 2. Ces éléments en saillie 30 et ces encoches 31 forment ainsi des moyens de blocage et des moyens de blocage complémentaires pour supprimer le jeu de l'OLED flexible 1, défini entre le pourtour de la zone fonctionnelle 32 et le rebord périphérique 16 du capot 3, lorsque l'OLED est encapsulée par le capot 3 et le boîtier 2.

Un deuxième mode de réalisation du dispositif lumineux est présenté, selon une vue en coupe transversale sur la figure 3.

Une OLED flexible 41 repose sur la paroi de fond 44 d'un boîtier 42 et l'OLED flexible 41 est plaquée par une paroi de plaquage 45 d'un capot 43 sur la paroi de fond 44 du boîtier 42.

Le boîtier 42 comporte un rebord périphérique 48 s'étendant depuis la paroi de fond 44 du boîtier 42 et formant une enceinte recevant l'OLED flexible 41. Ledit rebord périphérique 48 du boîtier 42 fait saillie par rapport à la surface émettrice de l'OLED flexible 41. La paroi de plaquage 45 du capot 43 est insérée dans l'enceinte pour plaquer l'OLED flexible 41 contre la paroi de fond 44 du boîtier 42 et une zone périphérique 50 du capot 43 repose sur le rebord périphérique 48 du boîtier 42.

Le capot 43 comporte un rebord périphérique 49 s'étendant depuis la zone périphérique 50 du capot 43, de sorte à ce que la zone périphérique 50 forme un renfoncement entre le rebord périphérique 49 et la paroi de plaquage 45, ce renfoncement recevant le rebord périphérique 48 du boîtier 42.

Le rebord périphérique 49 du capot 43 comporte une paroi intérieure périphérique 52 et le rebord périphérique 48 du boîtier 42 comporte une paroi extérieure périphérique 53, deux portions de ces parois périphériques 52 et 53 venant en contact à l'insertion de la paroi de plaquage 45 du capot 43 dans l'enceinte du boîtier 42. La paroi intérieure périphérique 52 du capot 43 comporte un clip 46 et la paroi extérieure périphérique 53 du boîtier 42 comporte une encoche 47. Le clip 46 et l'encoche 47 s'emboîtent élastiquement pour fixer l'un à l'autre le boîtier 42 et le capot 43. Le boîtier 42 et le capot 43 viennent ainsi encapsuler l'OLED flexible 41.

L'OLED flexible 41 est ainsi conformée selon une forme prédéterminée par le boîtier 42 et maintenue dans cette forme par le capot 43 de manière simple, rapide et peu couteuse.

Un autre mode de réalisation d'un dispositif lumineux selon l'invention est présenté sur la figure 4 montrant une vue en coupe transversale d'un tel dispositif.

Une OLED flexible 61 repose sur une paroi de fond 64 d'un boîtier 62 et l'OLED flexible 61 est plaquée par une paroi de plaquage 65 d'un capot 63 sur la paroi de fond 64 du boîtier 62.

Le boîtier 62 comporte un rebord périphérique 66 s'étendant depuis le pourtour de la paroi de fond 64 du boîtier 62 et définissant une enceinte recevant l'OLED flexible 61. Le rebord périphérique 66 du boîtier 62 affleure la surface émettrice de l'OLED flexible 61.

Une zone périphérique 67 du capot 63 repose sur ledit rebord périphérique 66 du boîtier 62. Et le rebord périphérique 66 du boîtier 62 est soudé à la zone périphérique 67 du capot 63 qui vient en contact du rebord périphérique 66 du boîtier 62 lors de la mise en place du capot 63 pour capsuler l'enceinte.

Le boîtier 62 et le capot 63 viennent ainsi encapsuler l'OLED flexible 61.

La figure 5 présente une OLED flexible conforme à celle utilisée dans les modes de réalisations déjà présentés en figures 1, 2A et 2B, et qui pourrait être utilisée telle quelle dans les modes de réalisations décrits aux figures 3 et 4.

L'OLED flexible 1 comprend plusieurs couches : une cathode 70, une anode 71 et une couche organique 72. La couche organique 72 comprend différentes strates 75 à 79 réalisées dans des matériaux organiques différents. En plus de la strate émettrice de lumière 77, la couche organique comprend une strate 75 favorisant le transport des électrons jusqu'à la strate émettrice 77 et une strate 79 favorisant le transport des trous jusqu'à la strate émettrice 77. La couche comprend aussi une strate 76 bloquant les trous venant des couches supérieures 77 à 79 et une strate 78 bloquant les électrons provenant des strates inférieures 75 à 77. L'ensemble de ces strates constitue une microcavité dont l'épaisseur est ajustée pour créer une résonance optique. Ainsi, on réalise des réflecteurs interférentiels sélectifs qui constituent des cavités résonnantes.

La strate émettrice de lumière 77 comprend une surface émettrice supérieure 33 et une surface émettrice inférieure 33.

Un générateur de tension électrique ou une source de courant électrique 80 permet d'alimenter l'OLED flexible 1.

Lorsque la couche organique est parcourue par un courant électrique, la surface émettrice supérieure 33 émet un rayonnement lumineux 73 se propageant au travers des strates supérieures 78 et 79 et de l'anode 71 qui sont transparentes relativement à ce rayonnement et la surface émettrice inférieure 33 émet un rayonnement lumineux se propageant au travers des strates inférieures 76 et 75 et de la cathode 70 qui sont transparentes relativement à ce rayonnement.

L'anode 71 et la cathode 70 sont réalisées en oxyde d'indium-étain (ITO) transparent.

## Revendications

1. Dispositif lumineux (6) pour dispositif d'éclairage et/ou de signalisation de véhicule automobile comportant :
- une source lumineuse surfacique flexible (1,41,61)
- un boîtier (2, 42, 62) agencé pour conformer au moins une partie de la source lumineuse surfacique flexible selon une forme prédéterminée
- un capot (3, 43, 63) agencé pour plaquer ladite partie de la source lumineuse surfacique flexible contre le boîtier
le boîtier et/ou le capot étant apte à laisser passer de la lumière émise par la source lumineuse surfacique flexible.

2. Dispositif lumineux (6) selon la revendication précédente, **caractérisé en ce que** le capot (3, 43, 63) est venu de matière avec le boîtier (2, 42, 62).

3. Dispositif lumineux (6) selon la revendication 1, **caractérisé en ce que** le dispositif comporte une charnière reliant le capot (3, 43, 63) et le boîtier (2, 42, 62) agencée de sorte à ce que le capot soit mobile vis-à-vis du boîtier pour permettre l'insertion de la source lumineuse surfacique flexible (1, 41, 61) entre le boîtier et le capot.

4. Dispositif (6) lumineux selon la revendication 1, **caractérisé en ce que** le boîtier (2, 42, 62) et le capot (3, 43, 63) sont deux éléments distincts.

5. Dispositif lumineux (6) selon la revendication 4, **caractérisé en ce que** le boîtier (2, 42, 62) et le capot (3, 43, 63) sont agencés pour venir en contact de façon à encapsuler la source lumineuse surfacique flexible (1, 41, 61).

6. Dispositif lumineux (6) selon la revendication précédente, **caractérisé en ce que** la source lumineuse surfacique flexible (1, 41, 61) repose sur une paroi de fond (17, 44, 64) du boîtier (2, 42, 62) et **en ce que** la source lumineuse surfacique flexible est plaquée par une paroi de plaquage (15, 45, 65) du capot (3, 43, 63) sur la paroi de fond du boîtier.

7. Dispositif lumineux (6) selon la revendication précédente, **caractérisé en ce que** le boîtier (2, 42, 62) comporte un rebord périphérique (16 48 49 66) s'étendant depuis la paroi de fond (17, 44, 64) du boîtier (2, 42, 62) et définissant une enceinte pour recevoir la source lumineuse surfacique flexible (1,41, 61).

8. Dispositif lumineux (6) selon la revendication précédente **caractérisé en ce qu'**au moins une partie du capot (3, 43, 63) repose sur ledit rebord périphérique (16 48 49 66) du boîtier (2, 42, 62) pour capsuler l'enceinte.

9. Dispositif lumineux (6) selon l'une des revendications 7 ou 8, **caractérisé en ce qu'**au moins une partie du capot (3, 43, 63), définissant la paroi de plaquage du capot (15, 45, 65), est insérée dans l'enceinte pour plaquer la source lumineuse surfacique flexible (1, 41, 61) contre la paroi de fond (17, 44, 64) du boîtier (2, 42, 62).

10. Dispositif lumineux (6) selon l'une quelconque des revendications précédentes, **caractérisé en ce que** la source lumineuse surfacique flexible (1, 41, 61) est une diode électroluminescente organique.

11. Dispositif lumineux (6) selon l'une quelconque des revendications précédentes, **caractérisé en ce qu'**au moins la paroi de plaquage (15, 45, 65) du capot (3, 43, 63) est réalisée dans un matériau transparent ou translucide.

12. Dispositif lumineux (6) selon l'une quelconque des revendications précédentes, **caractérisé en ce qu'**au moins la paroi de plaquage (15, 45, 65) du capot (3, 43, 63) est réalisée dans un matériau apte à coloriser la lumière émise par la source lumineuse surfacique flexible (1,41, 61).

13. Dispositif lumineux (6) selon l'une quelconque des revendications 6 à 12, **caractérisé en ce qu'**au moins une partie de la paroi de plaquage (15, 45, 65) du capot (3, 43, 63) est agencée pour dévier au moins une partie de la lumière émise par la source surfacique flexible (1, 41, 61) pour réaliser une fonction photométrique prédéterminée.

14. Dispositif lumineux (6) selon l'une quelconque des revendications précédentes, **caractérisé en ce qu'**il comporte des moyens de blocage (30) aptes à coopérer avec des moyens de blocage complémentaires (31) de la source lumineuse surfacique flexible (1, 41, 61) pour supprimer le jeu de ladite source lumineuse surfacique flexible dans le boîtier (2, 42, 62).
